# DEMANDE DE BREVET EUROPEEN

(11) **EP 0 554 189 A1**
(43) Date de publication de la demande: **04.08.1993**
(21) Numéro de dépôt: 93420019.7
(22) Date de dépôt: 19.01.1993
(51) Int. Cl.: D04H 13/00

(54) **Procédé pour l'obtention d'une structure textile complexe à base de nappes fibreuses non tissées**

(30) Priorité: 28.01.1992 FR 9201143
(71) Demandeur: PERFOJET S.A., F-38330 Montbonnot (FR)
(72) Inventeur: Vuillaume, André, F-38330 Biviers (FR)
(74) Mandataire: Laurent, Michel

(57) **Abrégé**

Procédé et installation pour l'obtention d'une structure textile complexe multicouches constituée de nappes fibreuses non tissées (2,3), et entre lesquelles est incorporée une structure de renforcement constituée de fils ou filaments continus (5), les différents constituants étant liés entre eux par enchevêtrement des fibres des nappes entre elles.

Selon l'invention, on réalise deux nappes non tissées (2,3) dans lesquelles les fibres élémentaires sont disposées de manière préférentielle dans le sens de la longueur, puis en ce que l'on incorpore entre ces deux nappes (2,3) une nappe (4) de fils de trame (5) disposés transversalement, espacés les uns des autres, réalisée immédiatement en amont de la ligne de jonction (6) entre les deux nappes non tissées (2,3) et en ce que, en aval de cette zone de jonction (6), on soumet le complexe formé à l'action d'un traitement mécanique permettant d'implanter les fibres d'une nappe (2) à l'intérieur de l'autre nappe (3) (et éventuellement inversement), le complexe homogène étant ensuite renvidé.

## Description

La présente invention concerne un procédé et une installation permettant de réaliser un nouveau type de structure textile complexe à partir de nappes fibreuses non tissées.

Il a été proposé depuis des décennies de substituer aux nappes textiles conventionnelles, tissées ou tricotées, des structures textiles planes dites "non tissées" constituées de fibres élémentaires réparties sensiblement dans un même plan, et orientées au hasard les unes par rapport aux autres, lesdites nappes pouvant être obtenues selon deux grandes techniques générales, l'une dite "technique par voie sèche" faisant appel à des opérations de cardage, nappage.., l'autre dite "par voie humide", et dérivant des techniques papetières.

Il a également été proposé de réaliser de telles nappes non tissées directement à partir de filaments chimiques continus, en sortie de leur filière d'extrusion, une telle technique étant désignée couramment de nos jours par l'expression "spun bonded".

De telles nappes non tissées élémentaires sont souvent transformées en structures plus complexes en fonction des applications envisagées comme cela ressort notamment du GB-A-1 600 768 et de l'US-A-2 588 228. En général, lorsque l'on souhaite obtenir des articles présentant de bonnes résistances mécaniques tant dans le sens long que dans le sens travers, on réalise des structures multicouches dans lesquelles on incorpore en "sandwich" des structures de renfort telles que des grilles textiles, tissées ou non tissées, la liaison de l'élément de renfort avec les couches externes non tissées étant obtenue par diverses techniques, telles que par exemple entrelaçage mécanique (technique d'aiguilletage), enchevêtrement des fibres par l'action de jets de fluide (eau en général), liage chimique ou liage thermique (calandrage) lorsque les non tissés élémentaires contiennent des fibres thermofusibles.

Pour les non tissés obtenus par voie papetière, il a été également proposé depuis fort longtemps de les associer à des structures de renforcement. De telles structures de renforcement peuvent être soit incorporées directement à l'intérieur de la pâte papetière lors de la fabrication, soit éventuellement incorporées entre deux nappes non tissées préalablement réalisées, la liaison étant en général obtenue dans ce dernier cas par collage.

En général, les techniques proposées à ce jour pour réaliser de telles structures complexes comportant un renfort interne, font appel à un cycle de fabrication discontinu (formation séparée des non tissés et du renfort, telles que grilles), l'assemblage étant réalisé lors d'une opération ultérieure, ce qui incontestablement augmente les coûts de fabrication et posent des problèmes de stockage des matériaux élémentaires.

Or on a trouvé, et c'est ce qui fait l'objet de la présente invention, un procédé et une installation qui non seulement permet de réaliser en continu de telles structures textiles multicouches constituées de nappes fibreuses non tissées et entre lesquelles est incorporée une structure de renforcement constituée de filaments (ou filaments) continus, et dans lequel les différents constituants sont liés entre eux par enchevêtrement des fibres des nappes entre elles et qui, par ailleurs, permet également par une sélection appropriée du choix de la nature des nappes fibreuses entrant dans la composition d'un tel complexe et de la technique d'enchevêtrement utilisée, permet, lorsque la structure de renforcement est constituée de fils parallèles s'étendant seulement dans la direction transversale, d'obtenir une amélioration des caractéristiques mécaniques du complexe également dans le sens long.

D'une manière générale, le procédé et l'installation conformes à l'invention pour la réalisation d'une telle structure textile complexe multicouches, se caractérise en ce que l'on réalise deux nappes non tissées dans lesquelles les fibres élémentaires sont disposées de manière préférentielle dans le sens de leur longueur, puis en ce que l'on incorpore entre ces deux nappes une nappe de fils de trame disposés transversalement et espacés les uns des autres, réalisée immédiatement en amont de la ligne de jonction entre les deux nappes non tissées et en ce que, en aval de cette zone de jonction, on soumet le complexe formé à au moins un traitement mécanique permettant d'implanter les fibres d'une nappe à l'intérieur de l'autre nappe (et éventuellement inversement), le complexe homogène ainsi réalisé étant ensuite renvidé.

Selon une forme préférentielle de mise en oeuvre du procédé conforme à l'invention, la longueur des fibres discontinues qui constitue les nappes fibreuses non tissées, est telle qu'elle est supérieure à l'espacement entre les fils transversaux constituant le renfort interne.

Par ailleurs, le traitement mécanique permettant d'implanter les fibres d'une nappe à l'intérieur de l'autre nappe, est de préférence un traitement mécanique d'aiguilletage réalisé par la technique dite à "jets d'eau" éventuellement associé à une opération de thermoliage.

Pour la mise en oeuvre du procédé conforme à l'invention, on utilisera avantageusement des nappes non tissées obtenues par cardage à haute vitesse. En effet, il a été constaté que le choix de telles nappes dans lesquelles on a une orientation préférentielle des fibres dans le sens de la longueur du voile formé, permet, dans la mesure où les fils de renfort transversaux sont disposés à l'intérieur du complexe de manière à avoir un espacement entre eux inférieur à la longueur des fibres qui forment le voile, d'obtenir non seulement une résistance du matériau améliorée dans le sens travers, mais également un blocage et une amélioration de la résistance du complexe dans le sens long, lesdites résistances étant sensiblement équilibrées. Un tel résultat est totalement inattendu compte tenu du fait qu'il est courant de trouver des non tissés ayant un rapport de résistance sens long et sens travers de 5 à 1, dans certains cas de 8 à 1 ou plus. De plus, cette résistance dans le sens travers se double d'un allongement considérable, ce qui se traduit par une absence de stabilité dimensionnelle rendant impropres les non tissés à des applications telles que les vêtements à usage unique par exemple. Or le matériau obtenu grâce au procédé conforme à l'invention permet de résoudre ce problème par le fait que le complexe formé présente, comme dit précédemment, non seulement une résistance améliorée dans le sens travers, ce qui est évident du fait de l'incorporation de renforts dans cette direction, mais également dans le sens long, ce qui en revanche, ne peut en aucun cas découler de la technique antérieure.

Le procédé conforme à l'invention permet de réaliser un très grand nombre de complexes différents, et ce par le simple choix des nappes non tissées qui peuvent être constituées, par exemple :
- de deux voiles de carde,
- un voile de carde et une feuille à base de fibres cellulosiques,
- d'un voile de carde et d'une voile non tissé obtenu par extrusion/soufflage (technique dite "melt blown") ;
- de deux voiles obtenus par extrusion/soufflage ;
- d'un voile de fibres associé à une nappe non tissée constituée de filaments continus (obtenue par la technique "spun bonded") ;
- voire même de deux voiles constitués de filaments continus ; dans un tel cas, on remplit obligatoirement la condition préférentielle de mise en oeuvre du procédé selon l'invention selon laquelle l'espacement entre les trames de renforcement doit être inférieur à la longueur des fibres.

L'invention et les avantages qu'elle apporte seront cependant mieux compris grâce à la suite de la description qui suit et des figures annexées dans lesquelles :
- la figure 1 illustre, de manière schématique et en perspective, la structure générale d'un matériau complexe réalisée conformément à l'invention ;
- la figure 2 est une vue agrandie schématique de la partie cerclée de la figure 1 montrant en coupe la structure d'un tel matériau ;
- la figure 3 est une vue schématique en perspective d'une installation permettant la mise en oeuvre du procédé conforme à l'invention ;
- la figure 4 illustre, également vu en perspective, une variante d'une machine conforme à l'invention.

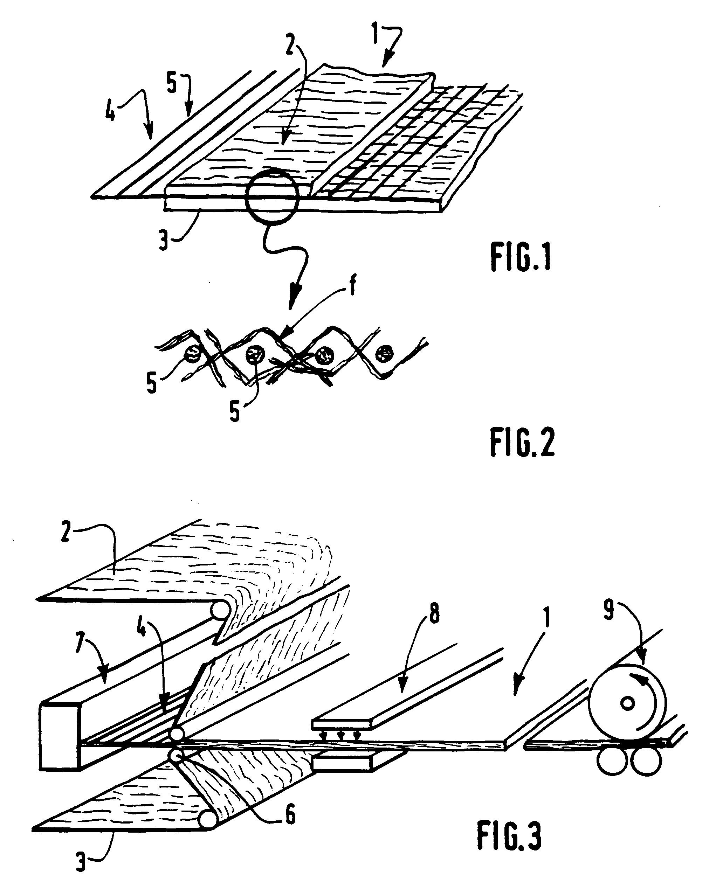

Si l'on se reporte aux figures annexées et plus particulièrement aux figures 1 et 2, la structure textile complexe réalisée conformément à l'invention et qui est désignée par la référence générale (1), est constituée de deux nappes non tissées (2,3) entre lesquelles est incorporée une structure de renforcement (4) constituée de fils ou filaments continus (5).

Selon l'invention, dans une telle structure complexe multicouches, au moins l'une des nappes (2,3) entrant dans sa composition est à base de fibres discontinues orientées de façon préférentielle dans le sens de la longueur de la nappe, telles que par exemple des voiles de carde. La longueur des fibres est telle qu'elle soit supérieure à l'espacement entre les fils transversaux (5) constituant le renfort interne (4). La liaison des nappes non tissées (2,3) entre elles est réalisée en soumettant le complexe à un traitement de consolidation mécanique par aiguilletage au moyen de jets d'eau. En procédant d'une telle manière, on a constaté que l'on obtenait une structure qui, vue en coupe, se présentait schématiquement comme illustré à la figure 2, et qui est telle que les fibres élémentaires (f) des nappes, constituent à chaque point de contact entre lesdites fibres (f) et les filaments (5) continus, une zone d'accrochage favorisant l'entremêlement des fibres et réduisant leur possibilité de glissement, ce qui permet d'augmenter la résistance du produit dans le sens long de façon significative.

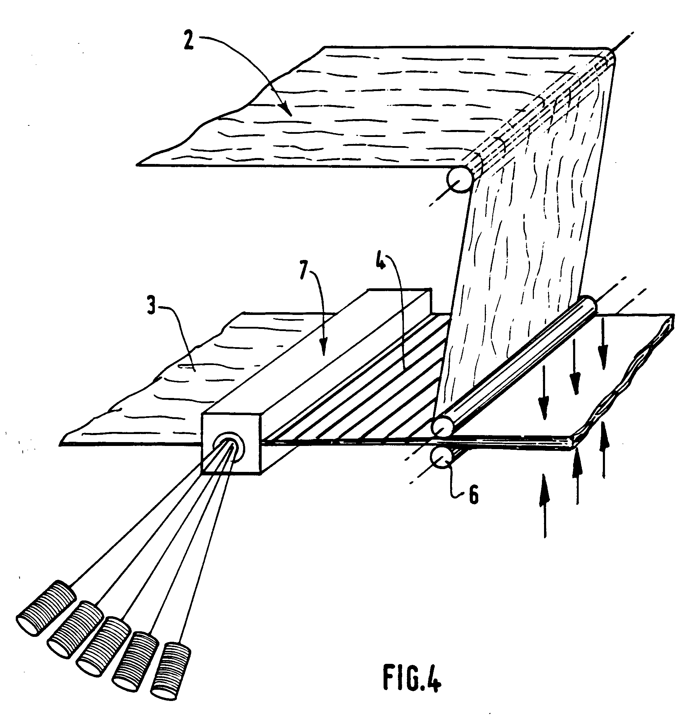

Pour réaliser un tel complexe, on procède de la manière illustrée aux figures 3 et 4 afin de réaliser à la continue la nappe de trame de renfort (4) et, son incorporation entre deux nappes non tissées (2,3) et l'assemblage des couches entre elles. Pour ce faire, les deux nappes (2,3) soit préalablement réalisées soit provenant directement d'une carde ou autre installation de production non représentée, sont amenées de manière séparée au niveau d'un ensemble de jonction (6) constitué par exemple de cylindres délivreurs. En amont de cette zone de jonction, est disposé un ensemble (7), de type connu, permettant de réaliser des nappes tramées. A titre indicatif, cet ensemble (7) permettant de réaliser à grande vitesse de telles nappes tramées (4), peut utiliser des installations telles que celles faisant l'objet du brevet WO 89/03445. Bien entendu, toute autre installation de formation de nappes de trame équivalentes permettant une production à grande vitesse, pourrait être utilisée. En aval de l'ensemble de jonction (6), le complexe formé est soumis à l'action d'un ensemble de liage permettant d'implanter les fibres des nappes à l'intérieur d'une autre nappe, par exemple les fibres de la nappe (2) à l'intérieur de la nappe (3). Un tel ensemble de liage (8) est avantageusement constitué par un ensemble d'aiguilletage mécanique et de préférence, un ensemble à jet d'eau, par exemple une installation du type commercialisé par le Demandeur sous la référence JETLACE. De préférence, on réalise une opération d'aiguilletage sur les deux faces du complexe. A la sortie de l'ensemble de liaison (8), le complexe (1) est renvidé en (9).

Si dans le mode de réalisation illustré à la figure 3, les deux nappes élémentaires (2,3) sont amenées simultanément à l'ensemble de liaison (6) en passant de part et d'autre de la tête (7) de formation de la nappe tramée (4), il pourrait être envisagé de faire passer l'une des nappes ((3) par exemple) à l'intérieur de l'ensemble (7) permettant de réaliser la nappe de trame (4). Une telle manière de procéder permet d'assurer le maintien des trames avant qu'elles soient emprisonnées entre la seconde nappe fibreuse (2) au niveau de la zone (6).

En procédant d'une telle manière, en utilisant comme ensemble trameur un dispositif tel que celui décrit dans le brevet WO 89/03455, il a été possible de réaliser des complexes à partir de nappes de carde de fibres de polyester pesant 20 g/m2 (longueur de chaque fibre : 38 mm ; 1,7 dtex) avec une vitesse de production de 40 m/min. L'insertion des trames est réalisée en ayant un espacement entre chaque fil (5) de un centimètre, ledit fil (5) étant constitué par des fils de polyester 76 dtex/34.

Après traitement de consolidation en (8), on obtient un complexe qui non seulement présente une très grande résistance dans le sens trame et dont l'allongement dans le même sens est diminué, et qui donc a une stabilité dimensionnelle renforcée. On constate également que la résistance dans le sens long est également renforcée, ce qui permet d'obtenir un article ayant des caractéristiques long et large globalement équilibrées et convenant particulièrement bien pour la réalisation, par exemple, d'articles vestimentaires à jeter.

Une telle manière de procéder permet également d'assembler entre elles des nappes non tissées obtenues selon la technique dite "par voie humide", de telles nappes présentant la caractéristique également d'avoir des fibres orientées de façon préférentielle sur leur longueur. A titre indicatif, il est possible sur une installation du type tel qu'illustré à la figure 3, de réaliser un complexe présentant de très bonnes caractéristiques mécaniques tant dans le sens long que dans le sens travers en assemblant deux non tissés préalablement réalisés pesant 25 g/m2 et constitués de 60 % de fibres cellulosiques et de 40 % de fibres polyester - 12 mm, 1,7 dtex, et entre lesquelles sont incorporées des trames espacées les unes des autres de 6 mm, la vitesse de production de l'ensemble étant réglée à 30 m/min.

Après traitement par jet de fluide, on obtient également un complexe présentant une résistance améliorée tant en travers qu'en long par rapport à une nappe non tissée et surtout une grande stabilité dimensionnelle dans les deux sens.

Bien entendu, l'invention n'est pas limitée aux exemples de réalisation décrits précédemment, mais elle en couvre toutes les variantes réalisées dans le même esprit.

## Revendications

**1/** Procédé et installation pour l'obtention d'une structure textile complexe multicouches constituée de nappes fibreuses non tissées (2,3), et entre lesquelles est incorporée une structure de renforcement constituée de fils ou filaments continus (5), les différents constituants étant liés entre eux par enchevêtrement des fibres des nappes entre elles, caractérisés en ce que l'on réalise deux nappes non tissées (2,3) dans lesquelles les fibres élémentaires sont disposées de manière préférentielle dans le sens de la longueur, puis en ce que l'on incorpore entre ces deux nappes (2,3) une nappe (4) de fils de trame (5) disposés transversalement, espacés les uns des autres, réalisée immédiatement en amont de la ligne de jonction (6) entre les deux nappes non tissées (2,3) et en ce que, en aval de cette zone de jonction (6), on soumet le complexe formé à l'action d'un traitement mécanique permettant d'implanter les fibres d'une nappe (2) à l'intérieur de l'autre nappe (3) (et éventuellement inversement), le complexe homogène étant ensuite renvidé.

**2/** Procédé et installation selon la revendication 1, caractérisé en ce que la longueur des fibres discontinues constituant les nappes fibreuses non tissées (2,3), est telle qu'elle est supérieure à l'espacement entre les fils transversaux (5) constituant le renfort interne (4).

**3/** Procédé et installation selon l'une des revendications 1 et 2, caractérisé en ce que le traitement mécanique permettant d'implanter des fibres d'une nappe (2) à l'intérieur de l'autre nappe (3), est un traitement mécanique par aiguilletage au moyen de jets d'eau, éventuellement associé à une opération de thermoliage.
